## Europäisches Patentamt

## European Patent Office

## Office européen des brevets

(19)

(11) Veröffentlichungsnummer: **0 087 443**

**B1**

(12) # EUROPÄISCHE PATENTSCHRIFT

(45) Veröffentlichungstag der Patentschrift:
**15.01.86**

(51) Int. Cl.⁴: **B 23 Q 7/00, B 65 G 25/02**

(21) Anmeldenummer: **82902671.5**

(22) Anmeldetag: **03.09.82**

(86) Internationale Anmeldenummer:
**PCT/DE 82/00178**

(87) Internationale Veröffentlichungsnummer:
**WO 83/00830 (17.03.83 Gazette 83/07)**

(54) **EINRICHTUNG FÜR DEN TRANSPORT VON SICH LÄNGS ERSTRECKENDEN WERKSTÜCKEN.**

(30) Priorität: **04.09.81 US 299790**

(43) Veröffentlichungstag der Anmeldung:
**07.09.83 Patentblatt 83/36**

(45) Bekanntmachung des Hinweises auf die Patenterteilung:
**15.01.86 Patentblatt 86/3**

(84) Benannte Vertragsstaaten:
**FR**

(56) Entgegenhaltungen:
**DE-A-2 337 024**
**DE-A-2 505 436**
**DE-C-1 096 284**
**FR-A-2 431 445**
**US-A-3 581 880**

(73) Patentinhaber: **PEDDINGHAUS, Rolf, Deterberger Strasse 25, D-5828 Ennepetal (DE)**

(72) Erfinder: **REGENBRECHT, Ludwig, Hasslinghauser Strasse 129, D-5820 Gevelsberg (DE)**

(74) Vertreter: **Groening, Hans Wilhelm, Dipl.- Ing., Siebertstrasse 4 Postfach 860 340, D-8000 München 86 (DE)**

EP 0 087 443 B1

**Beschreibung**

Die Erfindung betrifft einen Querförderer gemäß dem Oberbegriff des Patentanspruchs 1.

Ein Querförderer der vorgenannten bekannten Gattung ist aus der DE-C-1 096 284 bekannt. Bei dieser bekannten Vorrichtung besteht der Nachteil, daß mittels der Hubwagen die Werkstücke nicht senkrecht von ihren horizontalen Führungsbalken abgehoben und an der gewünschten Stelle senkrecht abgelegt werden können, weil die Koppel des Parallel-Kurbelgetriebes mit dem flexiblen Zugorgan formschlüssig verbunden ist. Die Hubplatte wird daher bei einer Schwenkbewegung der kurzen, mit der Hubplatte gelenkig verbundenen Hebel parallel zu sich selbst einer Schwenkbewegung unterworfen, bei der sie mit dem zu transportierenden Werkstück in reibende Berührung kommt, bis dieses unter dem Einfluß seiner Schwerkraft auf der Hubplatte fest aufliegt, wobei jedoch das Werkstück in Längsrichtung der Führungsbalken bewegt wird. Beim Absetzen des Werkstücks findet demnach entsprechende Auslenkbewegung der Hubplatte mit Werkstück statt.

Das Anheben eines Hubwagens mittels seiner Stellvorrichtung die direkt am Hubwagen angelenkt ist, ist prinzipiell bereits mit der FR-A 2 431 445 bekannt geworden.

Bei der Einrichtung gemäß US-A-3 917 978 sind durch einen Motor antreibbare Hubwagen auf einem horizontalen Führungssystem angebracht, das auf einem senkrechten Führungssystem anhebbar ist. Als Hubvorrichtung dienen hydraulische Zylinder in Stützen, welche das horizontale Führungssystem jeweils an den Enden tragen. In Abhängigkeit von der Belasung des horizontalen Führungssystems durch darauf befindliche Werkstücke, z.B. Doppel-T-Träger, ist es möglich, daß die Hubbewegung durch die beiden an den Enden eines horizontalen Führungssystems angreifenden hydraulischen Zylinder ungleichmässig stattfindet. Um eine dadurch hervorgerufene Verklemmung der gegeneinander beweglichen Teile zu vermeiden, sind besondere Konstruktionsmaßnahmen bei der bekannten Einrichtung vorgesehen, die infolgedessen in ihrem gesamten Aufbau sehr aufwendig und kostspielig ist und eine ungleichmässige, verzögerte Anhebung der Werkstücke durch das Hubsystem mit sich bringen kann.

Querförderer sind in der Regel Bestandteil von Fördersystemen, die dazu dienen; Werkstücke von einem Vorrat durch den Querförderer einem Längsförderer, z.B. einem Rollenförderer, zuzuführen, der das Werkstück in Längsrichtung einer Bearbeitungsvorrichtung, z.B. einer Säge, einer Stanze oder einem Bohrwerk zwecks Bearbeitung zuführt. Anschließend an die Bearbeitung wird durch den Längsförderer das bearbeitete Werkstück an der Ausgangsseite der Bearbeitungsvorrichtung bis in den Wirkungsbereich eines weiteren Querförderers transportiert, dessen Hubwagen das Werkstück von dem Längsförderer abheben und dieses seiner weiteren Bestimmung, z.B. der Weiterverarbeitung oder einem Lager zuführt. Eine Einrichtung dieser Art ist vollständig in der genannten US-PS 3 917 978 beschrieben, so daß auf die Darstellung und Beschreibung der Bearbeitungsvorrichtung und des Längsförderers verzichtet werden kann. Denn die vorliegende Erfindung bezieht sich ausschließlich auf eine Verbesserung der die Werkstücke quer zu ihrer Längsrichtung transportierenden Einrichtung, also des Querförderers, von dem je ein Querförderer bei einer Bearbeitungsanlage dem Längsförderer vor und hinter der Bearbeitungsvorrichtung zum Zuführen und Abführen der Werkstücke zugeordnet ist.

Der Erfindung liegt die Aufgabe zugrunde, den eingangs erwähnten bekannten Querförderer so zu verbessern, daß die Werkstücke ausschließlich in senkrechter Richtung von ihren Führungsbalken anhebbar und infolgedessen exakt an der Stelle absenkbar sind, die für die Werkstücke gefordert wird.

Die Erfindung löst diese Aufgabe durch die im Kennzeichen des Patentanspruchs 1 enthaltenden Merkmale.

Die Unteransprüche betreffen zweckmäßige Weiterbildungen Erfindung.

Weitere Merkmale der Erfindung sind nachstehend anhand der Beschreibung eines in der Zeichnung dargestellten Ausführungsbeispiels der Erfindung aufgeführt, das lediglich zur Erläuterung der Erfindung dient, deren Schutzumfang von der vorliegenden Beschreibung und den Patentansprüchen umrissen wird. Es zeigen:

Fig. 1 die Einrichtung gemäß der Erfindung in einer teilweise weggebrochenen Ansicht,

Fig. 2 eine Draufsicht zu Fig. 1,

Fig. 3 die Ansicht des Hubwagens in größerem Maßstab,

Fig. 4 eine Draufsicht auf den Hubwagen gemäß Fig. 3,

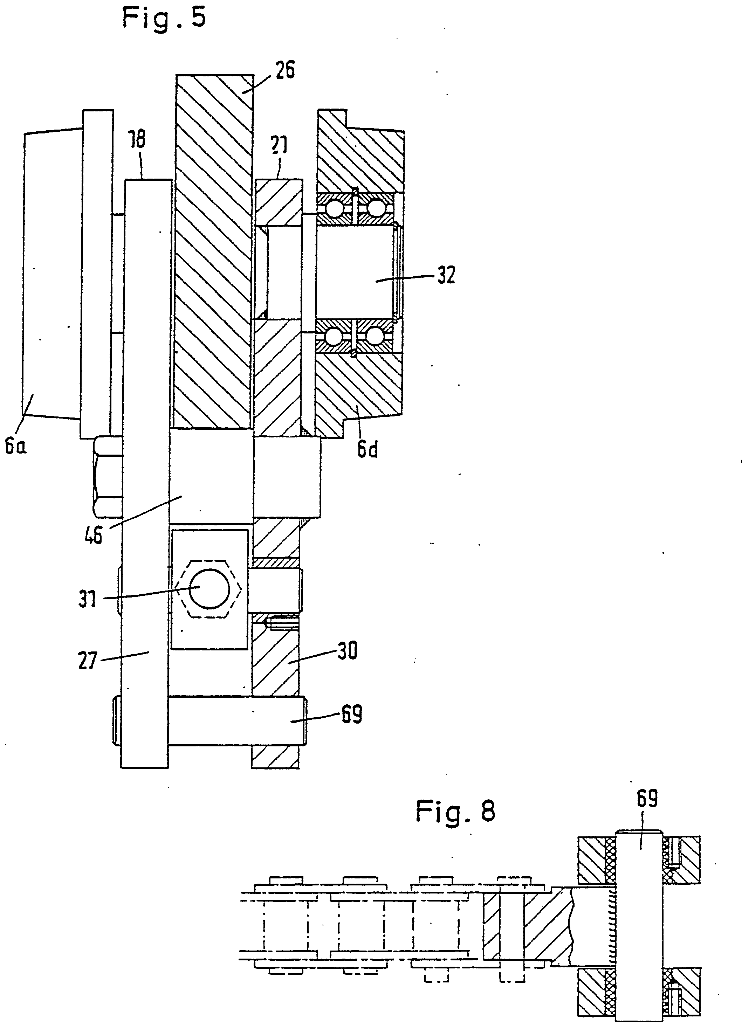

Fig. 5 einen Schnitt nach Linie V-V in Fig. 3

Fig. 6 einen Schnitt nach Linie VI-VI in Fig. 3

Fig. 7 einen Schnitt nach Linie VII-VII in Fig. 3 und

Fig. 8 einen schnitt nach Linie VIII-VIII in Fig. 3

In den Zeichnungen ist eine Einrichtung 1 für den im wesentlichen horizontalen Transport von sich längs erstreckenden Werkstücken, z.B. profilstäben, Doppel-T-Trägern usw., quer zu deren Längsrichtung gezeigt, die aus einem Traggerüst 2 mit senkrechten Stützen 3 und von den Stützen 3 getragenen horizontalen Führungsbalken 4 besteht. Die Führungsbalken 4 sind im Abstand parallel zur Transportrichtung der Werkstücke gerichtet. Es sind Hubwagen 5 vorgesehen, deren Laufräder 6a, 6b, 6c, 6d in seitlichen Längskanälen 7 der Führungsbalken 4 verfahrbar, jedoch gegen senkrechte Bewegungen gesichert sind. Ferner ist eine Hubvorrichtung 8 zum Anheben des Hubwagens 5 über die Oberseite der Führungsbalken 4 und zum Absenken der Hubwagen 5 unter die Oberseite der Führungsbalken 4 vorgesehen. Ein flexibles Zugorgan 9 ist mit seinen im Obertrum desselben vorgesehenen Enden 10, 11 jeweils mit dem Hubwagen 5 verbunden und unterhalb jedes Führungsbalkens 4 um ein Umlenkrad 12 und ein Antriebsrad 13 in senkrechter Ebene herumgeführt. Das Antriebsrad 13 sitzt auf einer Antriebswelle 14, die in an sich bekannter und daher nicht dargestellter Weise mit einem abbremsbaren Antriebsmotor kuppelbar ist. Die US-PS 3,917 978 zeigt vollständig einen Querförderer mit mehreren im Abstand voneinander angeordneten horizontalen Führungsbalken des Querförderers, so daß die Erfindung nur anhand eines Führungsbalkens mit darauf angeordneten Hubwagen dargestellt und beschrieben ist.

Das Umlenkrad 12 ist mit seiner horizontalen Drehachse 15 im Bereich des einen Endes der Führungsbalken 4 gelagert, während das Antriebsrad 13 mit seiner von der Antriebswelle 14 gebildeten horizontalen Achse im Bereich des anderen Endes der Führungsbalken 4 gelagert ist.

Erfindungsgemäß besteht die Hubvorrichtung 8 für jeden Hubwagen 5 aus einem Parallel-Kurbel-Getriebe 17, das aus paarweise gleichgroßen Seiten besteht und dessen Steg von einer Hubplatte 26 des Hubwagens 5, dessen kurze Seiten von Winkelhebeln 18, 19, 20, 21, deren Hubarme 22, 23, 24, 25 an der Hubplatte 26 angelenkt sind, und dessen Koppel von einer mit den Enden der Zugarme 27, 28, 29, 30 der Winkelhebel 18, 19, 20, 21 gelenkig verbundenen, in der Länge einstellbaren Stange 31 gebildet sind.

Die Achse 32 der Laufräder 6a, 6b, 6c, 6d ist im Bereich der Abwinklung 33 des zugehörigen Winkelhebels 18, 19, 20, 21 angebracht und bildet die Schwenkachse des betreffenden Winkelhebels.

Die Winkelhebel 18, 21 bzw. 19, 20 sind paarweise gleich ausgebildet und mit ihren Hubarmen 22, 25 bzw. 23, 24 paarweise über Hubachsen 42 bzw. 43 an je einem der beiden Enden der Hubplatte 26 schwenkbar angebracht. Dabei erstrecken sich die Hubarme der beiden Winkelhebelpaare von ihren zugehörigen Hubachsen 42, 43 etwa horizontal in Richtung des mit dem Antriebsrad 13 versehenen Endes der Einrichtung, während die Zugarme der Winkelhebel mit den zugehörigen Hubarmen einen stumpfen Winkel bilden und paarweise parallel zueinander abwärts gerichtet sind.

Die Laufradpaare 6a, 6d bzw. 6b, 6c sind im Bereich der Abwinklung 33 der zugehörigen Winkelhebel jeweils an deren Außenseite angebracht, wobei die Achsen der genannten Laufradpaare miteinander fluchten und jeweils im gleichen Abstand von den Hubachsen 42 bzw. 43 und Anlenkpunkten 67, 68 der zugehörigen Zugarmpaare 27, 30 bzw. 28, 29 für die in der Länge verstellbare Stange 17 angeordnet sind.

Das zum Umlenkrad hinführende Ende 10 des flexiblen Zugorgans 9 ist an einem Anlenkpunkt 69 an die beiden Zugarme 27, 30 der Winkelhebel 18, 21 angelenkt. Das andere, zum Antriebsrad 13 hinführende Ende 11 des flexiblen Zugorgans 9 ist an einen Zugorganhalter 37 bei 48 angelenkt, der auf einer horizontalen Führung 38 für das Obertrum des Zugorgans 9 beweglich geführt ist. Das dem Ende 11 des flexiblen Zugorgans abgekehrte Ende des Zugorganhalters ist mit einer Querachse 49 verschweißt, dessen beide über die parallelen Längsseiten des Zugorganhalters vorstehenden Enden je eine Stützrolle 50, 51 tragen. Auf einem Achsenende ist außerhalb einer Stützrolle eine Verriegelungslasche. 53 mittels Sprengring 72 angebracht und mit ihrem anderen Ende mittels einer Senkschraube 73 und einer Distanzhülse 54 mit dem stabförmigen Teil 47 des Zugorganhalters verschraubt. Infolgedessen wird zwischen dem stabförmigen Teil 47, der Lasche 53, der Distanzhülse 54 und der der Lasche benachbarten Stützrolle 50 eine Öffnung 39 gebildet, in die eine Seitenplatte 40 senkrecht relativ beweglich zu dem Zugorganhalter eingreift, welche auf der einen Außenseite der Hubplatte 26 befestigt ist. Eine der Seitenplatte 40 entsprechende Seitenplatte 41 ist an der anderen senkrechten Außenseite der Hubplatte 26 in Querrichtung fluchtend und in einem solchen Abstand zu der Seitenplatte 40 angebracht, daß beide Seitenplatten 40, 41 mit Spiel den stabförmigen Teil 47 des Zugorganhalters 37 übergreifen können und an den beiden Stützrollen 50, 51 zur Anlage kommen.

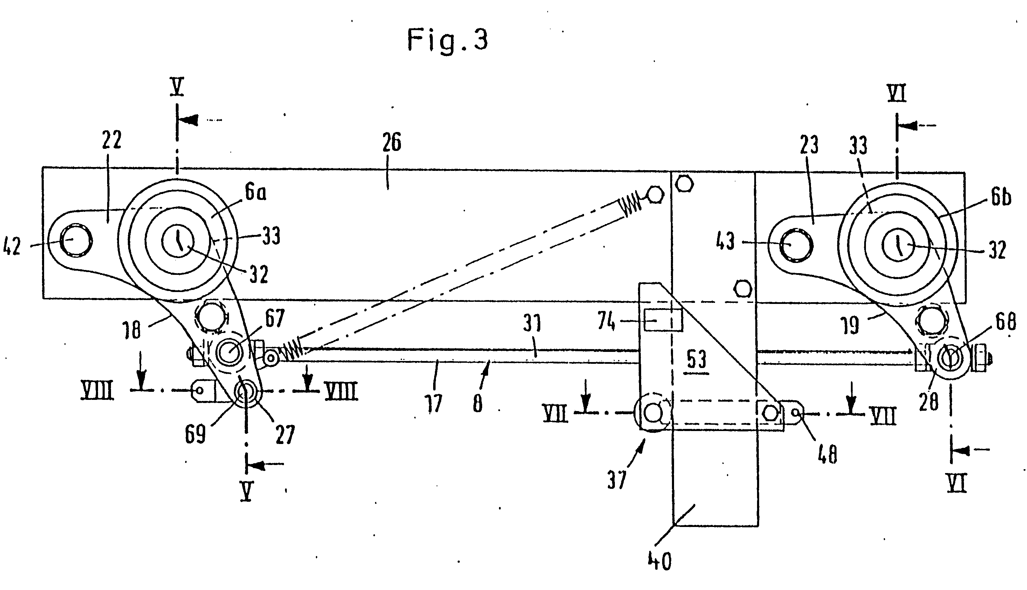

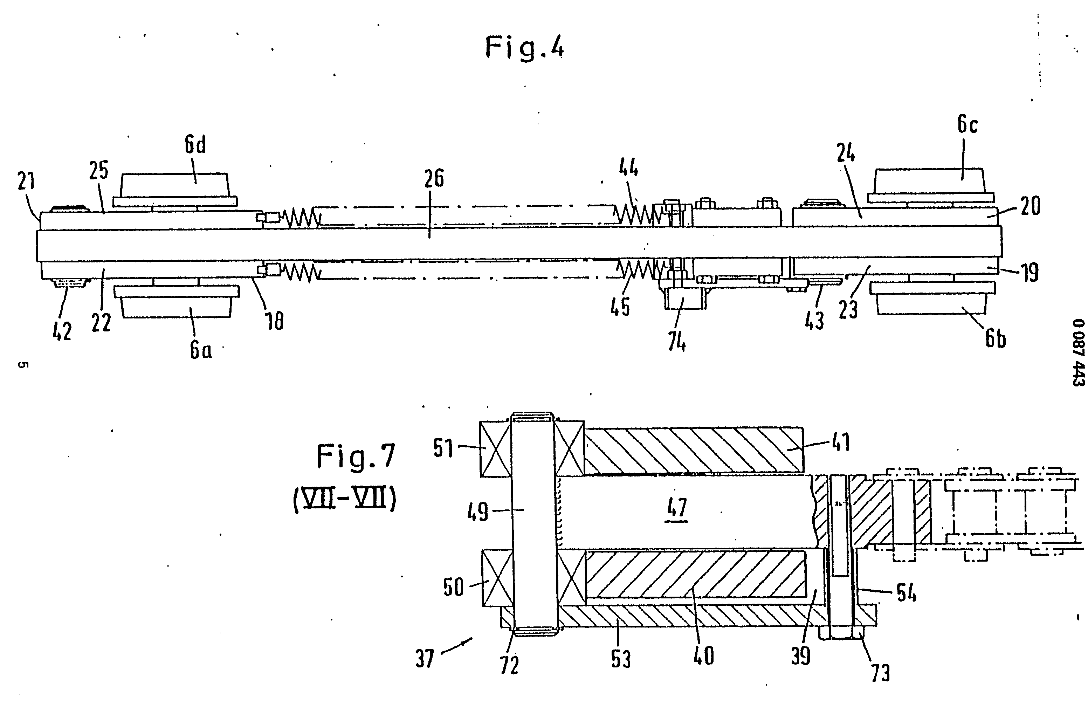

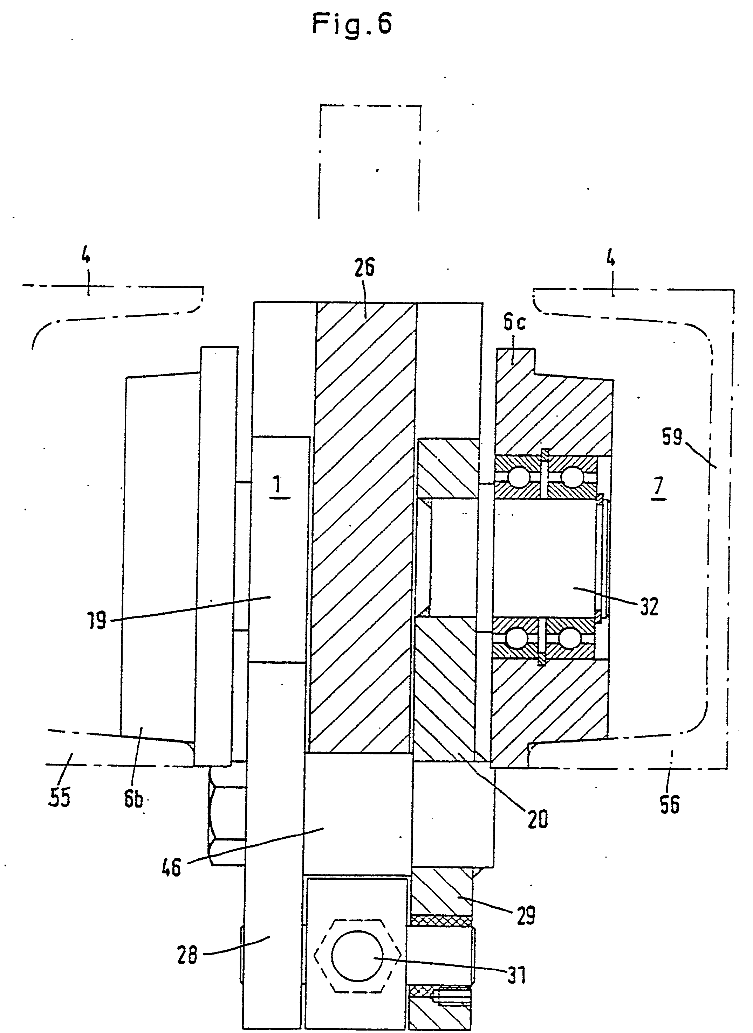

Die Lasche 53 ist, wie Fig. 3 zeigt, in Ansicht als rechtwinkliges Dreieck ausgebildet, wobei die Stützrollen 50, 51 in dessen rechtwinkliger Ecke liegen und sich von der Senkschraube 73 die Hypothenuse schräg aufwärts bis zum Schnittpunkt mit der senkrechten Kathetenseite der Lasche erstreckt. In der oberen Ecke ist ein nach außen vorstehender Anschlag 74 angeschweißt, der, wie aus Fig 3 und 4 ersichtlich ist, unterhalb der Bewegungsbahn der Laufräder 6a, 6b liegt, und, wie aus Fig. 6 ersichtlich ist, gegen die Unterseite eines, U-Profils 55 zur Anlage kommen kann. Das U-Profil bildet mit einem im Abstand parallel gegenüberliegenden U-Profil 56 jeweils einen Führungsbalken 4 für den Hubwagen 5, wobei sich die offenen Längskanäle 7 dieser U-Profile gegenüberliegen und die Innenflächen der unteren Schenkel der U-Profile 55, 56 als Lauffläche für die Laufräder 6a, 6b, 6c, 6d dienen. Durch den Anschlag 74 wird auf diese Weise die senkrechte Aufwärtsbewegung des Zugorganhalters 37 nach oben begrenzt.

Das dem Umlenkrad 12 zugeordnete Ende des Traggerüstes 2 ist mit einer Stellvorrichtung 34 versehen, die aus einem horizontal angeordneten Hubzylinder besteht, der in der Mitte zwischen den U-Profilen 55, 56 unterhalb der horizontalen Führung 38 für das Obertrum des Zugorgans 9 an einer Traverse 75 befestigt ist, die sich zwischen zwei senkrechten, aus den U-Profilen bestehenden Stützen 3 horizontal erstreckt. Das aus der Kolbenstange des Hubzylinders bestehende Stellglied 35 besteht am äußeren Ende aus einer Gabel 76, welche die Achse 15 für das Umlenkrad 12 trägt.

Wird die Antriebswelle 14 für das Antriebsrad 13 festgehalten und das Stellglied 35 aus der Stellvorrichtung 34 ausgefahren, so daß das Ende 10 des Zugorgans 9 in Richtung des Umlenkrades 12 gezogen wird, erfährt das Winkelhebelpaar 18, 21 eine Schwenkbewegung im Uhrzeigersinn um die Achse der Laufräder 6a, 6d Da das Winkelhebelpaar 19, 20 mit dem Winkelhebelpaar 18, 21 durch die Stange 17 verbunden ist, die parallel zur Hubplatte 26 gerichtet ist und deren Anlenkpunkte 67, 68 den gleichen Abstand voneinander aufweisen, wie die Hubachsen 42, 43 führt auch das Winkelhebelpaar 19, 20 den gleichen Schwenkwinkel wie das erstgenannte Winkelhebelpaar in Uhrzeigerrichtung um die Achse der Laufräder 6b, 6c aus. Infolge dieser Schwenkbewegung der Winkelhebelpaare in Uhrzeigerrichtung wird die Hubplatte 26 durch die Hubarme 22, 25 bzw. 23, 24 der Winkelhebel zwischen den beiden U-Profilen 55, 56 des Führungsbalkens 4 über deren Oberseite hinaus angehoben. Diese Hubbewegung der Hubplatte 26 ist genau senkrecht, weil sich die Seitenplatten 40, 41 mit ihren dem Umlenkrad 12 zugekehrten Stirnkanten an den Stützrollen 50,51 abstützen und die von den Laufradachsen gebildete Schwenkachse der Winkelhebelpaare deren Auslenkung beim Bewegen der Rubplatte durch eine horizontale Bewegung in den U-profilen 55, 56 ausgleichen kann.

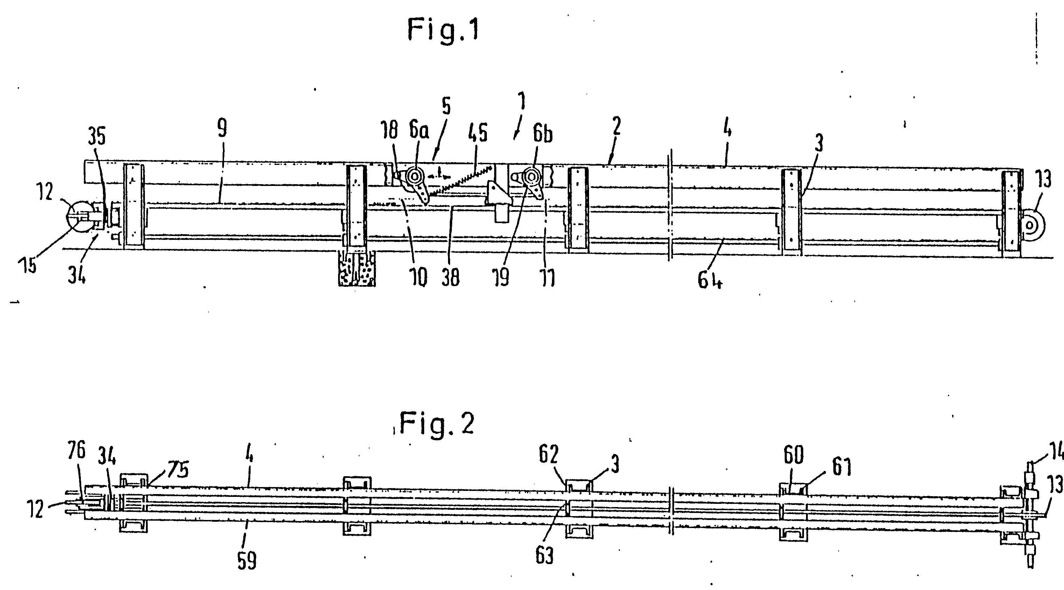

Beim Einfahren des Stellgliedes 35 in die Stellvorrichtung 34 sorgen an beiden Seiten der Hubplatte vorgesehene Zugfedern 44, 45 für die Ausübung der notwendigen Zugspannung auf das Ende des Zugorgans 9, so daß dieses gespannt bleibt und gleichzeitig die Winkelhebel unter der Wirkung der Zugfedern entgegen der Uhrzeigerrichtung geschwenkt werden, so daß die Hubplatte 26 wieder in ihre in Fig. 1 gezeigte Ausgangstellung unter die Oberseite des Führungsbalkens 4 abgesenkt wird.

Zwischen den Zugarmpaaren 27, 30 bzw. 28,29 befindet sich zwischem dem Anlenkpunkt 67 bzw. 68 und der Drehachse der Laufräder jeweils an gleicher Stelle ein Anschlag 46, der in der in den Fig. 1 und 3 gezeigten Ruhestellung der Hubplatte 26 bzw. der Winkelhebelpaare an der Unterseite der Hubplatte 26 anliegt und damit die Schwenkbewegung der Winkelhebelpaare entgegen der Uhrzeigerrichtung begrenzt.

Fig. 1 zeigt, daß auch das Untertrum des Zugorgans 9 in einer horizontalen Führung 64 geführt ist. Sowohl die Führung 38 als auch die Führung 64 bestehen jeweils aus einer glatten Führungsleiste, wobei Führungsbolzen 63 auf Traversen 62, die im Bereich der Stützen 3 angeordnet sind, die Seitenführung des Zugorgans 9 übernehmen, das gemäß Fig. 7 aus einer Laschenkette bestehen kann.

Schließlich ist anzumerken, daß die Stege 59 der die Führungsbalken 4 bildenden U-Profile 55, 56 mit Stegen 60 von im Abstand voneinander angeordneten U-profilen 61 lösbar, z.B. durch Schrauben, verbunden sind, welche in geeigneter weise im Boden verankert sind und jeweils die Stützen 3 bilden.

**Patentansprüche**

1. Querförderer (1) für den im wesentlichen horizontalen Transport von sich längs erstreckenden Werkstücken, bestehend aus einem
    1. Traggerüst (2) mit horizontalen Führungsbalken (4),
    1.1 in deren seitlichen Führungskanälen (7) Laufräder 6a, 6b, 6c, 6d von Hubwagen (5) bewegbar sind;
    2. einer Hubvorrichtung (8) zum Anheben eines Hubwagens (5) über die Oberseite der Führungsbalken (4) und zum Absenken des Hubwagens (5) unter die Oberseite der Führungsbalken (4),
    2.1 wobei die Hubvorrichtung (8) aus einem Parallel-Kurbelgetriebe (17) mit paarweise gleich großen Seiten besteht
    2.1.1 dessen kurze Seiten von Hebeln, die an einer Hubplatte (26) angelenkt sind, gebildet sind und
    2.1.2 dessen Koppel mit den Enden der Hebel gelenkig verbunden ist,
    2.2 wobei die Achse (32) jedes Laufrades (6a, 6b, 6c, 6d) die Schwenkachse des zugehörigen Hebels bildet;
    3. einem flexiblen Zugorgan (9) für den Transport des Hubwagens (5),
    3.1 das unterhalb der Führungsbalken (4) um ein Umlenkrad (12) am einen Ende und
    3.1.1 ein Antriebsrad (13) am anderen Ende der Einrichtung in senkrechter Ebene herumgeführt ist;
    4. einer Stellvorrichtung (34) in dem Traggerüst (2),
    4.1 deren Stellglied (35) horizontal beweglich ist und
    4.1.1 die horizontale Drehachse (15) des Umlenkrades (12) für das Zugorgan (9) trägt, dadurch gekennzeichnet, daß
    5. die Hebel (18, 19, 20, 21) als Winkelhebel ausgebildet sind,
    6. die Koppel von einer mit den Enden der Zugarme (27, 28, 29, 30) der Winkelhebel (18, 19, 20, 21) gelenkig verbundenen, in der Länge einstellbaren Stange (31) gebildet ist,
    7. daß die Achsen (32) der Laufräder (6a, 6b, 6c, 6d) im Bereich der Abwinklung der Winkelhebel (18, 19, 20, 21) angebracht sind,
    8. daß die Stellvorrichtung (34) für das Umlenkrad (12) aus einem Hubzylinder besteht,
    8.1 dessen Kolbenstange die Achse (15) des Umlenkrades (12) trägt,
    9. daß das zum Umlenkrad (12) hinführende Ende (10) des flexiblen Zugorgans (9) am Zugarm (27, 30) mindestenseines Winkelhebels (18, 21) angelenkt ist,
    9.1 der unter der Wirkung mindestens einer Zugfeder (44, 45) steht,

10. daß das andere, zum Antriebsrad (13) hinführende Ende (11) des flexiblen Zugorgans (9) an einem Zugorganhalter (37) befestigt ist,

10.1. der mittels mindestens einer Stützrolle (50, 51) auf einem senkrechten Führungsorgan (Seitenplatten 40) an der Hubplatte (26) vertikal bewegbar abgestützt ist,

so daß bei stillstehendem Antriebsrad (13) und Betätigung des Hubzylinders die Winkelhebel (18, 19, 20, 21) um die Achse (32) der Lauträder (6a, 6b, 6c, 6d) schwenkbar und daher die Hubplatte (26) unter Abstützung des Führungsorgans (40, 41) an den Stützrollen (50, 51) senkrecht anhebbar sowie ein Ausgleich der Auslenkung des Winkelhebels durch eine horizontale Bewegung der Lauräder (6a, 6b, 6c, 6d) in den Führungsbalken (4) vorgesehen sind.

2. Querförderer nach Anspruch 1, dadurch gekennzeichnet, daß der Zugorganhalter (37) auf der horizontalen Führung (38) für das Obertrum des flexiblen Zugorgans (9) beweglich geführt ist und eine senkrechte Öffnung (39) aufweist, in welche mindestens eine Seitenplatte (40, 41) an der Hubplatte (26) des Hubwagens (5) von oben relativ beweglich hineinragt.

3. Einrichtung nach Anspruch 2, dadurch gekennzeichnet, daß die Winkelhebel (18, 19, 29, 21) an den Außenseiten der Hubplatte (26) des Hubwagens (5) paarweise an je eine Hubachse (42, 43) angelenkt und jeweils an der Außenseite im Bereich ihrer Abwinklung (33) mit je einem der Lauräder (6a, 6b, 6c, 6d) versehen sind.

4. Querförderer nach Anspruch 1, dadurch gekennzeichnet, daß an den Zugarmen (27, 28, 29, 30) des Winkelhebelpaares (18, 21) zwei Zugfedern (44, 45) entgegen der Uhrzeigerrichtung angreifen, deren anderes Ende an der Hubplatte (26) des Hubwagens (5) befestigt ist, daß an der Außenseite des Zugarmes (27, 28, 29, 30) mindestens eines Winkelhebels (18, 19, 20, 21) ein Anschlag (46) befestigt ist, der unter der Wirkung der Zugfedern (44, 45) an der Unterseite der Hubplatte (26) die Winkelhebel (18, 19, 20, 21) in einer Schwenklage hält, in der die Oberseite der Hubplatte (26) unter die Oberseite des Führungsbalkens (4) abgesenkt ist.

5. Querförderer nach Anspruch 1, dadurch gekennzeichnet, daß der Zugorganhalter (37) aus einem sich längs erstreckenden stabförmigen Teil (47) besteht, dessen freies Ende mit einer quer verlaufenden Achse (49) verbunden ist, auf deren Ende zwei Stützrollen (50, 51) zur Abstützung des Zugorganhalters (37) auf einer Zugorganführung (38) und den an der Hubplatte (26) befestigten Seitenplatten (40, 41) angeordnet sind.

6. Querförderer nach Anspruch 5, dadurch gekennzeichnet, daß auf einem Ende der Stützrollenachse (49) des Zugorganhalters (37) vor der Außenseite einer Stützrolle (50) eine Lasche (53) lösbar befestigt ist, deren anderes Ende nahe dem Anlenkpunkt (48) des Zugorgans (9) an dem Zugorganhalter (37) mit diesem unter Zwischenschaltung einer Distanzhülse (54) verbunden ist.

7. Querförderer nach Anspruch 6, dadurch gekennzeichnet, daß die Lasche (53) im Abstand oberhalb der Stützrolle (50) an der Außenseite mit einem seitlich vorstehenden, den Führungsbalken (4) untergreifenden Anschlag (74) versehen ist.

## Claims

1. Transverse conveyor (1) for the essentially horizontal transport of elongate workpieces, consisting of

1. a supporting framework (2) with horizontal guide beams (4)

1.1 in the lateral guide channels (7) of which track wheels (6a, 6b, 6c, 6d) of lifting carriages (5) are movable;

2. a lifting device (8) for lifting a lifting carriage (5) over the top side of the guide beams (4) and for lowering the lifting carriage (5) under the top side of the guide beams (4)

2.1 with the lifting device (8) consisting of a parallel crank gear (17) with sides of equal size in pairs

2.1.1 the short sides of which being formed by levers articulated to a lifting plate (26) and

2.1.2 the connecting rod of which being linked to the ends of the levers

2.2 with the axle (32) of each track wheel (6a, 6b, 6c, 6d) forming the pivot axis of the associated lever;

3. a flexible pulling member (9) for the transport of the lifting carriage (5)

3.1 which is guided beneath the guide beams (4) via a direction-changing wheel (12) on one end and

3.1.1 a drive wheel (13) on the other end of the device in vertical direction;

4. a setting device (34) in the supporting framework (2)

4.1 the setting member (34) of which being movable horizontally and

4.1.1 supporting the horizontal pivot axle (15) of the direction-changing wheel (12) for the pulling member (9) characterized in that

5. the levers (18, 19, 20, 21) are formed as angle levers,

6. the connecting rod is formed by a longitudinally adjustable rod (31) connected pivotally to the ends of the pulling arms (27, 28, 29, 30) of the angle levers (18, 19, 20, 21),

7. the axles (32) of the track wheels (6a, 6b, 6c, 6d) are attached in the region of the angling of the angle lever (18, 19, 20, 21)

8. the setting device (34) for the direction-changing wheel (12) consists of a lifting cylinder

8.1 the piston rod of which supports the axis (15) of a guide wheel (12)

9. the end (10) of the flexible pulling member (9) leading to said guide wheel (12) is articulated to the pulling arm (27, 30) of at least one angle lever (18, 21)

9.1 which is under the action of at least one tension spring (44, 45)

10. the other end (11) of the flexible pulling member (9) leading to the drive wheel (13) is connected to a pulling-member holder (37)

10.1 which is movably supported for movement in vertical direction through at least one supporting roller (50, 51) on a vertical guide member (side plates 40) on the lifting plate (26)

so that, when the drive wheel (13) is stationary, and the lifting cylinder is actuated, the angle levers (18, 19, 20, 21) are pivotable about the axis (32) of the track wheels (6a, 6b, 6c, 6d) and thus, the lifting plate (26) by supporting the guide member (40, 41) on the supporting rollers (50,51) can be vertically lifted and a compensation of the deflection of the angle lever through a horizontal movement of the track wheels (6a, 6b, 6c, 6d) in the guide beams (4) is provided.

2. Transverse conveyor according to claim 1, characterized in that the pulling-member holder (37) is guided movably on the horizontal guide (38) for the upper section of the flexible pulling member (9) and has a vertical aperture (39) into which at least one side plate at the lifting plate (26) of the lifting carrier (5) projects relatively movably from the top side.

3. Transverse conveyor according to claim 2, characterized in that the angle levers (18, 19, 20, 21) are articulated in pairs to the outer sides of the lifting plate (26) of the lifting carriage (5), each to a lifting axle (42, 43), and are each provided on the outer side, in the region of their angling (33), with one of the track wheels (6a, 6b, 6c, 6d).

4. Transverse conveyor according to claim 1, characterized in that two tension springs (44, 45) engage against the clockwise direction on the pulling arms (27, 28, 29, 30) of the pair of angle levers (18, 21), and the other end of said tension springs is fastened to the lifting plate (26) of the lifting carriage (5), a stop (46) being fastened to the outer side of the pulling arm (27, 28, 29, 30) of at least one angle lever (18, 19, 20, 21), this stop holding the angel levers (18, 19, 20, 21), under the action of the tension springs (44, 45), against the underside of the lifting plate (26) in a pivoting position in which the top side of the lifting plate (26) is lowered under the top side of the guide beam (4).

5. Transverse conveyor according to claim 1, characterized in that the pulling-member holder (37) consists of an elongate bar-shaped part (47), the free end of which is connected to a transverse axle (49), on the ends of which are located two supporting rollers (50, 51) for supporting the pulling-member holder (37) on a pulling-member guide (38) and the side plates (40, 41) fastened to the lifting plate (26).

6. Transverse conveyor according to claim 5, characterized in that a plate (53) is fastened releasably to one end of the supporting-roller axle (49) of the pulling member holder (37) before the outer side of a supporting roller (50), and the other end of this plate is connected, near the hinge point (48) of the pulling member (9) on the pulling-member holder (37), to the latter, with a spacer sleeve (54) interposed between them.

7. Transverse conveyor according to claim 6, characterized in that the plate (53) is provided at a distance above the supporting roller (50), on the outer side, with a laterally projecting stop (74) engaging under the guide beam (4).

**Revendications**

1. Convoyeur transversal (1) servant au transport essentiellement horizontal de pièces à traiter s'étendant longitudinalement et qui est constitué par

1. une ossature de support (2) comportant des poutres horizontales de guidage (4),

1.1. dans les canaux de guidage (7) desquelles peuvent se déplacer des galets de roulement (6a; 6b, 6c, 6d) de chariots élévateurs (5);

2. un dispositif de levage (8) servant à soulever un chariot élévateur (5) au-dessus de la face supérieure des poutres de guidage (4) et servant à abaisser le chariot élévateur (5) au-dessous de la face supérieure des poutres de guidage (4);

2.1. le dispositif de levage (8) étant constitué par des mécanismes à manivelles parallèles (17) comportant de grands côtés deux-à-deux identiques,

2.1.1. et dont les petits côtés sont formés par des leviers qui sont articulés sur une plaque de levage (26), et

2.1.2. dont la bielle est reliée de façon articulée aux extrémités des leviers,

2.2. l'axe (32) de chaque galet de roulement (6a, 6b, 6c, 6d) constituant l'axe de pivotement du levier associé;

3. un organe flexible de traction (9) servant au transport du chariot élévateur (5)

3.1. et qui s'enroule, au-dessous des poutres de guidage (4), autour d'un galet de renvoi (12) au niveau d'une extrémité du dispositif et

3.1.1. s'enroule autour d'un galet d'entraînement (13) au niveau de l'autre extrémité du dispositif, dans un plan vertical;

4. un dispositif de réglage (34) monté dans l'ossature de support (2),

4.1. et dont l'organe de réglage (35) est déplaçable horizontalement, et

4.1.1. porte l'axe horizontal de rotation (15) du galet de renvoi (12) pour l'organe de traction (9), caractérisé par le fait que

5. les leviers (18, 19, 20, 21) sont réalisés sous la forme de leviers coudés,

6. la bielle est formée par une barre (31) dont la longueur est réglable et qui est reliée par articulation aux extrémités des bras de traction (27, 28, 29, 30) des leviers coudés (18, 19, 20, 21),

7. que les axes (32) des galets de roulement (6a, 6b, 6c, 6d) sont montés dans la région de la partie coudée des leviers coudés (18, 19, 20, 21),

8. que le dispositif de réglage (34) pour le galet de renvoi (12) est constitué par un vérin de levage,

8.1. dont la tige de piston porte l'axe (15) du galet de renvoi (12),

9. que l'extrémité (10), aboutissant au galet de renvoi (12), de l'organe flexible de traction (9) est articulée sur le bras de traction (27, 30) d'au moins un levier coudé (18, 21),

9.1. qui est soumis à l'action d'au moins un ressort de traction (44, 45),

10. que l'autre extrémité (11), aboutissant au galet d'entraînement (13), de l'organe flexible de traction (9) est fixée sur un support (37) de l'organe de traction,

10.1 qui est soutenu de façon à pouvoir être déplacé verticalement sur la plaque de levage (26), à l'aide d'au moins un galet de soutien (50, 52) monté sur un organe vertical de guidage (plaques latérales 40), de telle sorte que lorsque le galet d'entraînement (13) est à l'arrêt et que le vérin de levage est actionné, les leviers coudés (18, 19, 20, 21) peuvent être pivotés autour de l'axe (32) des galets de roulement (6a, 6b, 6c, 6d) et que par conséquent la plaque de levage (26) peut être soulevée verticalement par suite de la venue de l'organe de guidage (40, 41) en appui sur les galets de soutien (50, 51), et qu'il est prévu une compensation de la déviation du levier coudé grâce à un déplacement horizontal des galets de roulement (6a, 6b, 6c, 6d) dans les poutres de guidage (4).

2. Convoyeur transversal suivant la revendication 1, caractérisé par le fait que le support (37) de l'organe de traction est guidé de manière à être dèplaçable sur le guide horizontal (38) pour le brin supérieur de l'organe de traction associé (9) et comporte une ouverture verticale (39) dans laquelle au moins une plaque latérale (40, 41) pénètre avec possibilité de déplacement relatif à partir du haut, à côté de la plaque de levage (26) du chariot élévateur (5).

3. Dispositif suivant la revendication 2, caractérisé par le fait que les leviers coudés (18, 19, 20, 21) sont articulés par couples, au niveau d'axes de levage respectifs (42, 43) sur les faces extérieures de la plaque de levage (26) du chariot élévateur (5) et sont pourvus chacun de l'un des galets de roulement (6a, 6b, 6c, 6d), sur la face extérieure, au niveau de leur partie coudée (33).

4. Convoyeur transversal suivant la revendication 1, caractérisé par le fait que sur les bras de traction (27, 28, 29, 30) du couple de leviers coudés (18, 21) s'accrochent deux ressorts de traction (44, 45) agissant en sens inverse des aiguilles d'une montre et dont l'autre extrémité est fixée à la plaque de levage (26) du chariot élévateur (5), que sur la face extérieure du bras de traction (27, 28, 29, 30) d'au moins un levier coudé (18, 19, 20, 21), une butée (46) qui, sous l'action du ressort de traction (44, 45) agissant sur la face inférieure de la plaque de levage (26), maintient les leviers coudés (18, 19, 20, 21) dans une position pivotée dans laquelle la face supérieure de la plaque de levage (26) est abaissée au-dessous de la face supérieure de la poutre de guidage (4).

5. Convoyeur transversal suivant la revendication 1, caractérisé par le fait que le support (37) de l'organe de traction est constitué par une partie en forme de bord (47) disposée longitudinalement et dont l'extrémité libre est reliée à un axe (49) disposé transversalement et sur les extrémités duquel se trouvent disposés deux galets de soutien (50, 51) servant à soutenir le support (37) de l'organe de traction sur un guide (38) de l'organe de traction et sur les plaques latérales (40, 41) fixées à la plaque de levage (26).

6. Convoyeur transversal suivant la revendication 5, caractérisé par le fait que sur l'extrémité de l'axe (49) des galets de soutien du support (37) de l'organe de traction se trouve fixée d'une manière détachable, en avant de la face extérieure d'un galet de soutien (50), une plaquette (53) dont l'autre extrémité est reliée, à proximité du point d'articulation (48) de l'organe de traction (9) sur le support (37) de ce dernier, à ce support moyennant le montage intercalé d'une douille-entretoise (54).

7. Convoyeur transversal suivant la revendication 6, caractérisé par le fait que la plaquette (53) comporte, à une certaine distance au-dessus du galet de soutien (50) et sur la face extérieure, une butée (74) faisant saillie latéralement et s'engageant au-dessous de la poutre de guidage (4).

0 087 443

Fig.1

Fig.2

Fig.3

# Fig.4

# Fig.7
(VII-VII)

## Fig. 5

## Fig. 8

# Fig.6